Europäisches Patentamt

European Patent Office

Office européen des brevets

(19)

(11) Publication number: **0 465 718 A2**

# (12) EUROPEAN PATENT APPLICATION

(21) Application number: **90120894.2**

(22) Date of filing: **31.10.90**

(51) Int. Cl.5: **G01N 21/35**, G01N 31/12

(30) Priority: **11.07.90 US 551618**

(43) Date of publication of application:
**15.01.92 Bulletin 92/03**

(84) Designated Contracting States:
**DE FR GB IT**

(71) Applicant: **AUTOCLAVE ENGINEERS, INC.**
**2901 West 22nd Street**
**Erie Pennsylvania 16506(US)**

(72) Inventor: **Brill, Thomas B.**
**101 Tanglewood Lane**
**Newark, Delaware 19711(US)**
Inventor: **Bowe, Woodford A.**
**927 Telegraph Road**
**Rising Sun, Maryland 21911(US)**

(74) Representative: **Rambelli, Paolo et al**
**Jacobacci-Casetta & Perani S.p.A. Via Alfieri 17**
**I-10121 Torino(IT)**

(54) **Pyrolytic sampling cell.**

(57) A pyrolysis sampling cell (19) for IR spectroscopy comprises a body (16) having a hollow interior, removable pressure sealing infrared windows (20, 21) at each axial end of the body, and a transverse bore (22) intersecting the hollow interior. A pyrolysis probe (13) is inserted in the transverse bore (22) providing a pressure seal. The probe comprises an electrical resistance element (43) and lead wires herein for heating a specimen. Specimens can be rapidly changed by removal and replacement of the probe and the windows can be easily cleaned by removal and replacement thereof.

FIG. 2

FIG. 3

EP 0 465 718 A2

This invention relates to pyrolytic sampling cells for infrared spectroscopic instruments. More particularly, this invention relates to pyrolytic sampling cells for Fourier transform infrared analysis (FTIR).

It is possible to obtain FTIR data on solid, nonvolatile samples through the use of pyrolysis directly in the light path of the spectrometer. This extends the application of FTIR to opaque samples, composites, paints, laminates and other complex industrial products. Pulse pyrolysis allows for the rapid identification of materials, while time-resolved experiments permit the monitoring of species as they evolve from the sample. See Brill et al., "A Structural and Fourier Transform Infrared Spectroscopy Characterization of the Thermal Decomposition of 1-(Azidomethyl)-3,5,7-trinitro-1,3,4,7-tetrazacyclooctane", The Journal of Physical Chemistry, Vol. 88 pp. 4138-4143 (1984); Oyumi and Brill, "Thermal Decomposition of Energetic Materials 3. A High-Rate, In Situ, FTIR Study of the Thermolysis of RDX and HMX with Pressure and Heating Rate as Variables", Combustion and Flame, Vol. 62 pp. 213-224 (1985); and Cronin and Brill, "Thermal Decomposition of Energetic Materials 26. Simultaneous Temperature Measurements of the Condensed Phase and Rapid-Scan FT-IR Spectroscopy of the Gas Phase at High Heating Rates", Applied Spectroscopy, Vol. 41, No. 7, pp. 1147-1151 (1987).

A principal advantage of FTIR is the short time needed to gather data and the fast processing of the data to obtain identification of the sample or its components. While much more time consuming analytical methods, such as chromatography, may be required for precise identification of certain compounds, rapid FTIR analysis has significant applications.

Since the actual FTIR analysis of a sample is very rapid, all other procedures associated with the analysis need to be streamlined to take advantage of the speed of analysis. The sampling cell turn around, that is, the process of removing the spent sample from the cell, purging and cleaning the cell and placing the next sample in the cell, must be efficient.

It is an advantage, according to this invention, to provide a pyrolytic sampling cell in which the sample can be easily inserted and removed from the cell along with the heating element.

It is a further advantage, according to this invention, to provide a pyrolytic sampling cell in which the cell can be easily disassembled and the interior surfaces thereof cleaned.

It is a further advantage, according to this invention, that the sample holding probe can be easily connected and disconnected from the power supply.

It is a yet further advantage, according to this invention, that the lead wires for powering the heating element and the control wires are not permanently sealed in the cell wall.

Briefly, according to this invention, a pyrolysis sampling cell for IR spectroscopy provides an enclosure in which samples can be pyrolized adjacent the path of an infrared beam. The cell comprises a body having a hollow cylindrical, preferably circular cylindrical, interior defining a cylindrical axis. Removable pressure sealing windows at each axial end of the cylindrical body are transparent to infrared radiation enabling an infrared beam to pass through the hollow interior of the cell in the axial direction. A transverse bore intersecting the hollow interior is positioned to receive the pyrolysis probe inserted therein. The probe provides a pressure seal of said bore. The probe comprises an electrical resistance element and lead wires therein for heating a sample carried by the probe into the hollow interior of the body. The positioning of the transverse bore and the configuration of the probe are such that the heating element is positioned below the axis of the infrared beam. Inlets and outlets are provided in the cell body for pressurizing the interior and for passing sweep gases therethrough.

Preferably, the probe has a handle portion, a wire sealing portion and a sample support portion. The handle portion provides a grip for handling the probe when it is not inserted in the sampling cell and surfaces for sealing the transverse bore when the probe is inserted therein. According to one embodiment, a threaded gland surrounds the probe and has external threads for engaging mating internal threads in the transverse bore. The gland bears upon a radial flange extending from the probe. The sealing portion of the probe electrically insulates the power and control wires passing from the handle portion to the sample support portion while pressure sealing the sample support portion from the handle portion. The sample support portion comprises means for supporting an electrical heating element and sample in the hollow of the sampling cell off the infrared beam axis of the cell.

Preferably, the probe has a handle portion that can be easily disassembled to expose connectors for releasably connecting lead wires to the probe.

Preferably, each window of the cell comprises an externally and internally threaded cylinder. The external threads are sized to thread into internal mating threads provided in the sampling cell. An externally threaded gland threads into the externally and internally threaded cylinder. The gland compresses a sealing ring against a lens arranged such that when the cell is pressurized, the sealing ring is provided with added sealing pressure.

Further features and other objects and advantages of this invention will become clear from the following detailed description made with reference to the drawings in which:

Fig. 1 is a schematic diagram showing the functional relationships of the elements of a pyrolysis FTIR analysis system;

Fig. 2 is a side view in partial section of the sampling cell according to this invention;

Fig. 3 is an end view of the sampling cell in partial section;

Fig. 4 is side view of an end sealing piece;

Fig. 5 is a section view of the end sealing piece;

Fig. 6 is a is a side view of the sampling probe with the handle laid open; and

Fig. 7 is a side view in partial section of the wire sealing and sample holding section of the sample probe.

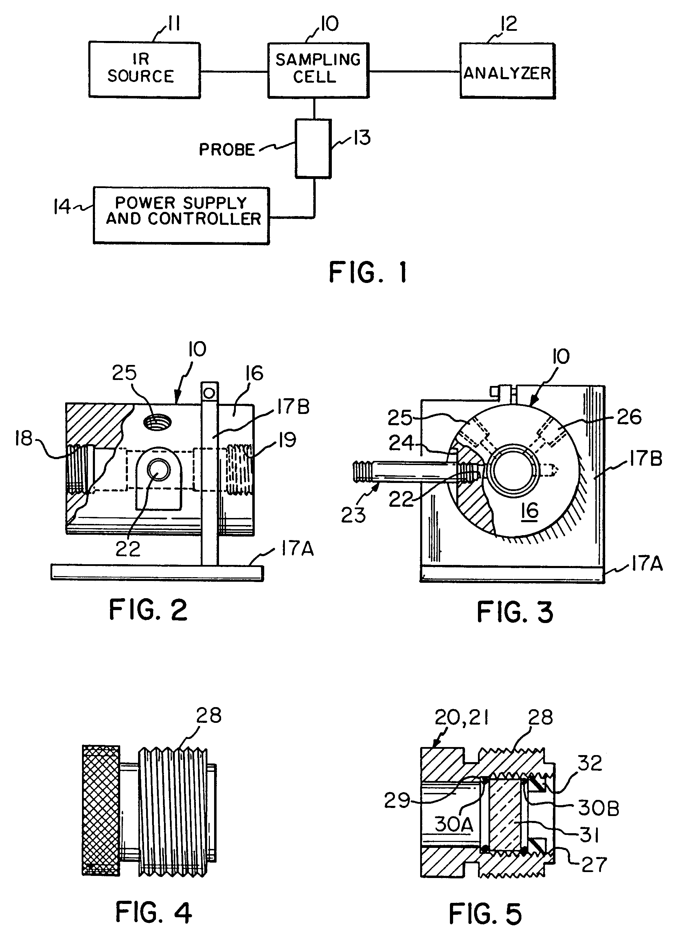

Referring now to Fig. 1, there is shown a functional diagram of a system for pyrolytic FTIR analysis. The system comprises a pyrolytic sampling cell 10, spaced between an IR source 11 and an FTIR analyzer 12. According to this invention, a sample probe 13 is inserted in the sampling cell to position the sample therein. The sample probe is powered and controlled by a power supply and controller 14.

IR radiation passes through the atmosphere in the sampling cell 10 which contains the products of pyrolization at the time of testing and then to the FTIR analyzer 12 for analysis of the adsorption spectrum. The IR source and FTIR analyzer are old in the art. Moreover, power supplies and controllers are also old in the art and are taught, for example, in U.S. Patent No. 4,600,827 entitled "Dual-Powered Pyrolysis Probe Driving Circuit." The applicants' invention resides in the combination of a uniquely configured sampling probe and sampling cell.

Referring now to Figs. 2 and 3, the sampling cell is a hollow cylindrical body 16 that is mounted upon a base 17A by a standard 17B. The cell body defines an internal bore that has internal threads 18, 19 at each end to receive the sealing end pieces 20, 21 (see Figs. 4 and 5). The sampling cell has a transverse bore 22 with a concentric threaded recess 23 and a flat surface 24 surrounding the threaded recess. The sampling cell is further provided with radial bores 25, 26 with threaded recesses for receiving plugs and or connections to conduits for pressurizing the cell or passing sweep gases through the cell. The entire interior surface of the sampling cell is coated with a non-sticking coating, such as Teflon or another fluorinated polymer or the like.

Referring now to Figs. 4 and 5, the sealing end piece is a cylindrical shape having internal threads 27 and external threads 28. A radial surface 29 at the interior end of the internal threads provides a stop for the following items: O-ring seals 30A and 30B, lens 31, and threaded retaining ring 32. The retaining ring is preferably Teflon-like material.

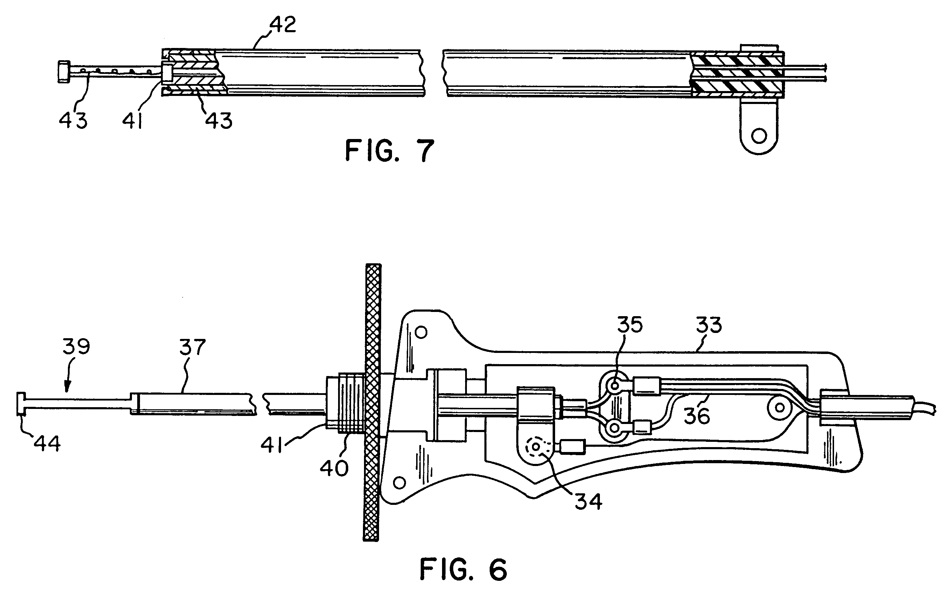

Referring now to Fig. 6, the sample probe with the handle laid open is shown. The probe comprises a handle portion 33 that is used to handle the probe when it is out of the sampling cell and which contains the terminals 34, 35 for quickly connecting and disconnecting power and control leads 36 from the controller. This enables quick change from a probe having a filament heating element to one having a ribbon heating element which change is often desirable.

The probe further has an elongate wire sealing portion 37 through which power and control leads pass to the heating element positioned in the sample supporting portion 39. (The internal structure of the sealing portion and sample support portion will be described in more detail with reference to Fig. 7.) Surrounding the wire sealing portion is a threaded gland 40 that bears upon a radial flange 41 on the outer surface of the wire sealing portion of the probe. The threads of the gland 40 are sized to screw onto the threaded probe seal adapter 23 where it compresses a soft packing material between the end of the probe adapter 23 and the sealing gland 40 to secure and seal the probe in the sampling cell.

Referring now to Fig. 7, the sealing and sample supporting portion of the probe is comprised of various parts joined together. An elongate Kovar (iron-nickel-cobalt alloys having thermal expansion characteristics of hard glass) or stainless steel tube 42 having a glass-to-metal seal 41, forms the base of the structure. At the sample end of the tube 42, a portion of the metal is cut away to allow for welding the heating element 43 between the probe end 42 and the glass-to-metal seal 41. The heating element 46 is also where the sample is supported when the probe is in the sampling cell 10. Power and control leads are soldered to the opposite side of the glass-to-metal seal 41 to provide power to the heating element 43 with the power path being through the glass-to-metal seal 41, heating element 43 and returning through the probe body 42.

Having thus defined our invention in detail and with the particularity required by the Patent Laws, what is sought to be protected by Letters Patent is set forth in the following claims.

## Claims

1. A pyrolysis sampling cell for IR spectroscopy providing an enclosure in which specimens can be pyrolized adjacent the path of an infrared beam comprising:

    a) a body having a hollow cylindrical interior defining a cylindrical axis,

    b) removable pressure sealing window means at each axial end of the cylindrical body, said sealing means being transparent to infrared radiation enabling an infrared beam to pass through the hollow interior in the axial direction,

c) a transverse bore intersecting the hollow interior,

d) a pyrolysis probe for being inserted in the off axis bore and for providing a pressure seal of said bore, said probe comprising an electrical resistance element and lead wires therein for heating a specimen carried by the probe into the hollow interior of the body, and

e) inlet and outlet means for pressurizing said interior and for passing sweep gases therethrough, such that specimens, heating elements, and probes can be rapidly changed by removal and replacement of the probe and the sealing means can be easily cleaned by removal and replacement thereof.

2. A pyrolysis sampling cell according to claim 1 wherein the probe has a handle portion, a wire sealing portion and a sample supporting portion, said handle portion providing a means for handling the probe when it is not inserted in the sampling cell and sealing the off axial bore when the probe is inserted therein, said sealing portion providing means for electrically insulating the power and control wires passing from the handle portion to the specimen support portion while pressure sealing the specimen support portion from the handle portion, said sample support portion comprising means for supporting an electrical heating element and specimen in the interior of the sampling cell off the axis of the cell.

3. A pyrolysis sampling cell according to claim 2 wherein the handle portion of the probe can be easily disassembled and means are thereby exposed for releasably connecting lead wires to the probe.

4. A pyrolysis sampling cell according to claim 2 wherein the specimen support portion of the probe supports a specimen boat adjacent to the heating element.

5. A pyrolysis sampling cell according to claim 2 wherein the cell uses a probe with at least two power lead wires and one control lead wire that pass through the sealing portion of the cell.

6. A pyrolysis sampling cell according to claim 2 wherein each sealing means comprises an externally and internally threaded cylinder, the external threads being sized to thread into internal mating threads provided in the sampling cell, an externally threaded gland, a sealing ring and a lens, said gland for compressing the sealing ring against the lens and arranged such that when the cell is pressurized the sealing ring is provided with added sealing pressure.

7. A pyrolysis sampling cell according to claim 2 wherein each sealing means comprises an externally threaded gland, a sealing ring and a lens, said gland being threaded into internal threads provided in the cell for compressing the sealing ring against the lens.

8. A pyrolysis sampling cell according to claim 1 wherein the probe comprises both the means for heating the specimen and also the means for sensing the heating element temperature.

9. A pyrolysis sampling probe according to claim 1 further comprising means for controlling the heating rate and temperature of the heating element.

10. A pyrolysis sampling cell according to claim 1 in which the cell body is aluminum or stainless steel and in which the interior is coated with a non-sticking coating.

11

IR
SOURCE

10

SAMPLING
CELL

12

ANALYZER

13

PROBE

14

POWER SUPPLY
AND CONTROLLER

FIG. 1

25  10  16  17B  18  19  22  17A

FIG. 2

10  25  24  26  17B  22  23  16  17A

FIG. 3

28

FIG. 4

20,21  28  32  29  30A  30B  31  27

FIG. 5

FIG. 7

FIG. 6